(19) Europäisches Patentamt
European Patent Office
Office européen des brevets

(11) **EP 4 201 718 B1**

(12) **EUROPÄISCHE PATENTSCHRIFT**

(45) Veröffentlichungstag und Bekanntmachung des Hinweises auf die Patenterteilung:
**12.06.2024 Patentblatt 2024/24**

(21) Anmeldenummer: **22214193.9**

(22) Anmeldetag: **16.12.2022**

(51) Internationale Patentklassifikation (IPC):
**B60H 1/00** *(2006.01)* **F16L 55/033** *(2006.01)*

(52) Gemeinsame Patentklassifikation (CPC):
**B60H 1/00564;** B60H 2001/006; F16L 55/0331; F16L 55/0336

(54) **LUFTFÜHRUNGSELEMENT FÜR KRAFTFAHRZEUGE**

AIR GUIDING ELEMENT FOR MOTOR VEHICLES

ELÉMENT DE GUIDAGE D'AIR POUR VÉHICULES AUTOMOBILES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **23.12.2021 DE 102021134435**

(43) Veröffentlichungstag der Anmeldung:
**28.06.2023 Patentblatt 2023/26**

(73) Patentinhaber: **REHAU Automotive SE & Co. KG 95111 Rehau (DE)**

(72) Erfinder:
• **Betz, Willi-Heinz**
  **95131 Schwarzenbach am Wald (DE)**
• **Kroll, Markus**
  **08538 Weischlitz (DE)**
• **Schmidt, Jonas**
  **95445 Bayreuth (DE)**

(56) Entgegenhaltungen:
**EP-A1- 3 838 637      DE-B3- 10 331 085
JP-A- 2014 231 263**

## Beschreibung

Die vorliegende Erfindung betrifft ein Luftführungselement für Kraftfahrzeuge mit mindestens einem langgestreckten Hohlkörper dessen Innenwandung einen Luftführungskanal vorgibt, wobei in dem Hohlkörper entlang seiner Längserstreckungsrichtung schallabsorbierende Zusatzkörper vorgesehen sind, die in dem Hohlkörper so angeordnet und befestigt sind, dass Luft, welche im Hohlkörper entlang des Luftführungskanals strömt, zusätzlich an den Zusatzkörpern entlang strömt und mit diesen wechselwirkt, wobei die Zusatzkörper unterschiedliche Dicken aufweisen und die Zusatzkörper je nach Dicke eine andere Frequenz Y des durch die Luft übertragenen Schalls absorbieren.

Ein gattungsgemäßes Luftführungselement kann der Offenlegung EP 3 838 637 A1 entnommen werden. Nachteilig an einer derartigen Luftführung ist, dass die schallabsorbierenden Zusatzkörper in ihrer Dicke anhand des vorhandenen Querschnitts des Luftführungskanals orientieren und hierdurch zu viele oder zu lange Zusatzkörper verwendet werden. Die Geschwindigkeit der durch das Luftführungselement strömenden Luft wird hierdurch stärker reduziert als es für die gewünschte Schallabsorption notwendig wäre. Bei der Verwendung in der Klimaanlage eines Kraftfahrzeuges führen reduzierte Geschwindigkeiten der zu fördernden Luft zur Notwendigkeit leistungsstärkere Gebläse mit hohem Energieverbrauch zu verwenden. Weitere Luftführungselemente mit schallabsorbierenden Zusatzkörpern sind in den Dokumenten DE 103 31 085 B3 und JP 2014 231263 A offenbart.

Die Erfindung stellt sich daher die Aufgabe ein gattungsgemäßes Luftführungselement für Kraftfahrzeuge so zu konstruieren, dass die Dicke der Zusatzkörper optimiert und die Reduktion der Geschwindigkeit der strömenden Luft minimiert wird.

Diese Aufgabe wird erfindungsgemäß gelöst durch ein Luftführungselement für Kraftfahrzeuge mit mindestens einem langgestreckten Hohlkörper dessen Innenwandung einen Luftführungskanal vorgibt, wobei in dem Hohlkörper entlang seiner Längserstreckungsrichtung schallabsorbierende Zusatzkörper vorgesehen sind, die in dem Hohlkörper so angeordnet und befestigt sind, dass Luft, welche im Hohlkörper entlang des Luftführungskanals strömt, zusätzlich an den Zusatzkörpern entlang strömt und mit diesen wechselwirkt, wobei die Zusatzkörper unterschiedliche Dicken aufweisen und die Zusatzkörper je nach Dicke eine andere Frequenz Y des durch die Luft übertragenen Schalls absorbieren, wobei sich die Dicken der Zusatzkörper in Abhängigkeit zu den durch das Luftführungselement zu absorbierenden Frequenzen Y wie folgt definieren:

$$Dicke\ d = \frac{Schallgeschwindigkeit\ in\ Luft}{X \cdot Frequenz\ Y}$$

wobei X einen Wert zwischen 7 bis 9 einnimmt.

Durch die erfindungsgemäße Berechnung der Dicke der Zusatzkörper anhand der obenstehenden Formel, lassen sich die notwenigen Dicken zur Absorption von Schall einer bestimmten Frequenz gezielt und optimiert berechnen. Es wird hierdurch weder ein zu dicker, noch ein zu dünner Zusatzkörper in dem Luftführungselement verwendet. Die Schallgeschwindigkeit in trockener Luft von 20 °C ist 343,2 m/s (Meter pro Sekunde).

Die zu absorbierenden Frequenzen liegen hierbei im Bereich zwischen 800 Hertz und 2500 Hertz. Dies entspricht dem Bereich, der für das menschliche Gehör am empfindlichsten wahrnehmbar ist.

Die Variation der Dicken der Zusatzkörper kann kontinuierlich oder gestuft erfolgen.

Der langgestreckte Hohlkörper weist in einer Variante der Erfindung entlang seiner Längserstreckungsrichtung variierende Querschnittsflächen auf und die Zusatzkörper werden so innerhalb des Hohlkörpers positioniert, das die Differenz aus Querschnittsfläche und Fläche des Zusatzkörpers jeweils mit einer Abweichung von höchsten 20% zueinander variiert, damit die verbleibende Restquerschnittsfläche in Strömungsrichtung der Luft weitestgehend konstant bleibt.

Die Zusatzkörper können aus einer einzelnen Schicht oder aus mehreren Schichten aufgebaut sein.

Die Zusatzkörper können aus einem Vliesmaterial, vorzugsweise aus einem PET-Vliesmaterial, gebildet sein.

Die der durchströmenden Luft zugewandten Seiten der Zusatzkörper weisen in einer bevorzugten Ausführungsform der Erfindung zusätzlich eine mikroperforierte Oberfläche, vorzugsweise gebildet durch eine mikroperforierte Folie, insbesondere durch eine mikroperforierte PP-Folie, auf.

Der Hohlkörper kann durch wenigsten zwei miteinander verbundene Schalen gebildet sein. Alternativ kann der Hohlkörper als einstückig ausgebildeter Blasform-Hohlkörper ausgebildet sein.

Der langgestreckte Hohlkörper kann im Querschnitt rund, oval, viereckig und/oder vieleckig ausgebildet sein.

Kein Teil der Erfindung ist ein Verfahren, das wie folgt definiert ist:

Verfahren zur Herstellung eines Luftführungselements für Kraftfahrzeuge mit mindestens einem langgestreckten Hohlkörper dessen Innenwandung einen Luftführungskanal vorgibt, wobei der Hohlkörper entlang seiner Längserstreckungsrichtung variierende Querschnittsflächen aufweist, wobei innerhalb des Hohlkörpers schallabsorbierende Zusatzkörper vorgesehen sind, die so innerhalb des Hohlkörpers angeordnet sind, dass Luft, welche im Hohlkörper entlang des Luftkanals strömt, zusätzlich an den Zusatzkörpern entlang strömt und mit diesem wechselwirkt, wobei dass das Verfahren folgende Schritte umfasst:

- Bereitstellen des Luftführungselements,
- Bestimmen eines Querschnitt-Segments der Luftführung bei dem die Querschnittsfläche größer ist als die Querschnittsfläche des an dieses Querschnitt-Segment angrenzenden weiteren Querschnitt-Segments der Luftführung,
- Nutzen des Differenz-Raums des Querschnitt-Segments im Vergleich zu dem Raum des angrenzenden weiteren Querschnitt-Segments zur Platzierung eines der schallabsorbierenden Zusatzkörper innerhalb dieses Differenz-Raums,
- Bestimmen einer maximalen Dicke des Zusatzkörpers anhand der Höhe des Differenz-Raums,
- Berechnen des möglichen zu absorbierenden Frequenzspektrums anhand der bestimmten maximal zur Verfügung stehenden Dicke des Zusatzkörpers,
- Auswählen einer Dicke des Zusatzkörpers zur Absorption einer spezifischen Frequenz des Schalls der transportierten Luft aus dem berechneten möglichen Frequenzspektrum anhand der Formel:

$$Dicke\ d = \frac{Schallgeschwindigkeit\ in\ Luft}{X \cdot Frequenz\ Y}$$

wobei X einen Wert zwischen 7 bis 9 einnimmt.

Ausführungsbeispiele

Im Folgenden wird die Erfindung anhand lediglich Ausführungsbeispiele darstellender Zeichnung erläutert. Es zeigen schematisch:

Fig. 1   Frontalansicht eines Luftführungselements;
Fig. 2   eine Querschnittsdarstellung durch das Luftführungselement aus Fig. 1.

In den Figuren werden gleiche oder funktionsgleiche Elemente mit den gleichen Bezugszeichen versehen.

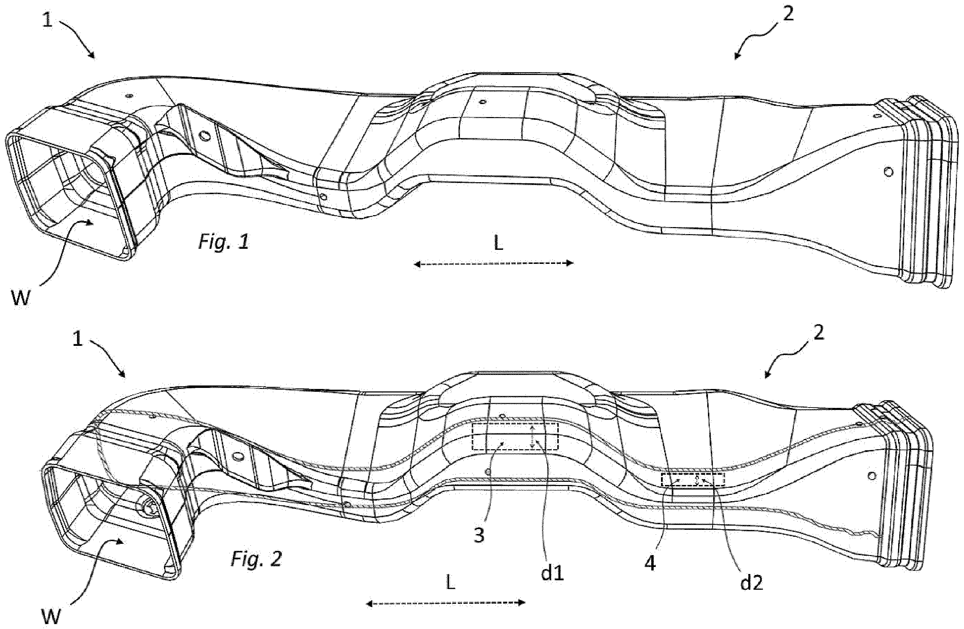

In Fig. 1 ist ein Luftführungselement für Kraftfahrzeuge mit mindestens einem langgestreckten Hohlkörper 1 dessen Innenwandung Weinen Luftführungskanal 2 vorgibt dargestellt.
In Fig. 2 ist erkennbar, dass in dem Hohlkörper 1 entlang seiner Längserstreckungsrichtung L schallabsorbierende Zusatzkörper 3, 4 vorgesehen sind, die in dem Hohlkörper 1 so angeordnet und befestigt sind, dass Luft, welche im Hohlkörper 1 entlang des Luftkanals 2 strömt, zusätzlich an den Zusatzkörpern 3, 4 entlang strömt und mit diesen wechselwirkt, wobei die Zusatzkörper 3, 4 unterschiedliche Dicken d1, d2 aufweisen und die Zusatzkörper 3, 4 je nach Dicke d1, d2 eine andere Frequenz Y des durch die Luft übertragenen Schalls absorbieren.
Die Dicken d1, d2 der Zusatzkörper 3, 4 definieren sich in Abhängigkeit zu den durch das Luftführungselement zu absorbierenden Frequenzen Y wie folgt:

$$Dicke\ d = \frac{Schallgeschwindigkeit\ in\ Luft}{X \cdot Frequenz\ Y}$$

wobei X einen Wert zwischen 7 bis 9 einnimmt.
Die zu absorbierenden Frequenzen liegen in diesem Ausführungsbeispiel zwischen 800 Hertz und 2500 Hertz. Die Variation der Dicken d1, d2 der Zusatzkörper 3, 4 erfolgt hier gestuft.
Der langgestreckte Hohlkörper 1 weist entlang seiner Längserstreckungsrichtung variierende Querschnittsflächen auf und die Zusatzkörper 3, 4 werden so innerhalb des Hohlkörpers 1 positioniert, das die Differenz aus Querschnittsfläche und Fläche des Zusatzkörpers 3, 4 jeweils mit einer Abweichung von höchsten 20% zueinander variiert, damit die verbleibende Restquerschnittsfläche in Strömungsrichtung der Luft weitestgehend konstant bleibt. Die Zusatzkörper 3, 4 sind aus einer einzelnen Schicht oder aus mehreren Schichten aufgebaut.
Die Zusatzkörper 3, 4 sind aus einem Vliesmaterial, vorzugsweise aus einem PET-Vliesmaterial, gebildet.
Die der durchströmenden Luft zugewandten Seiten der Zusatzkörper 3, 4 weisen zusätzlich eine mikroperforierte Oberfläche, vorzugsweise gebildet durch eine mikroperforierte Folie, insbesondere durch eine mikroperforierte PP-Folie, auf.

**Patentansprüche**

1. Luftführungselement für Kraftfahrzeuge mit mindestens einem langgestreckten Hohlkörper (1) dessen Innenwandung (W) einen Luftführungskanal (2) vorgibt, wobei in dem Hohlkörper (1) entlang seiner Längserstreckungsrichtung (L) schallabsorbierende Zusatzkörper (3, 4) vorgesehen sind, die in dem Hohlkörper (1) so angeordnet und befestigt sind, dass Luft, welche im Hohlkörper (1) entlang des Luftführungskanals (2) strömt, zusätzlich an den Zusatzkörpern (3, 4) entlang strömt und mit diesen wechselwirkt, wobei die Zusatzkörper (3, 4) unterschiedliche Dicken (d1, d2) aufweisen und die Zusatzkörper (3, 4) je nach Dicke (d1, d2) eine andere Frequenz Y des durch die Luft übertragenen Schalls absorbieren,
   **dadurch gekennzeichnet, dass**

   sich die Dicken (d1, d2) der Zusatzkörper (3, 4) in Abhängigkeit zu den durch das Luftführungselement zu absorbierenden Frequenzen Y wie folgt definieren:

   $$Dicke\ d = \frac{Schallgeschwindigkeit\ in\ Luft}{X \cdot Frequenz\ Y}$$

   wobei die Schallgeschwindigkeit in trockener Luft von 20 °C 343,2 m/s ist und, wobei
   X einen Wert zwischen 7 bis 9 einnimmt und die zu absorbierenden Frequenzen zwischen 800 Hertz und 2500 Hertz liegen.

2. Luftführungselement nach Anspruch 1, **dadurch gekennzeichnet, dass** die Variation der Dicken (d1, d2) der Zusatzkörper (3, 4) kontinuierlich oder gestuft erfolgt.

3. Luftführungselement nach einem der vorstehenden Ansprüche, **dadurch gekennzeichnet, dass** der langgestreckte Hohlkörper (1) entlang seiner Längserstreckungsrichtung (L) variierende Querschnittsflächen aufweist und die Zusatzkörper (3, 4) so innerhalb des Hohlkörpers (1) positioniert werden, das die Differenz aus Querschnittsfläche und Fläche des Zusatzkörpers (3, 4) jeweils mit einer Abweichung von höchsten 20% zueinander variiert, damit die verbleibende Restquerschnittsfläche in Strömungsrichtung der Luft weitestgehend konstant bleibt.

4. Luftführungselement nach einem der vorstehenden Ansprüche, **dadurch gekennzeichnet, dass** die Zusatzkörper (3, 4) aus einer einzelnen Schicht oder aus mehreren Schichten aufgebaut sind.

5. Luftführungselement nach einem der vorstehenden Ansprüche, **dadurch gekennzeichnet, dass** die Zusatzkörper (3, 4) aus einem Vliesmaterial, vorzugsweise aus einem PET-Vliesmaterial, gebildet sind.

6. Luftführungselement nach einem der vorstehenden Ansprüche, **dadurch gekennzeichnet, dass** die der durchströmenden Luft zugewandten Seiten der Zusatzkörper (3, 4) zusätzlich eine mikroperforierte Oberfläche, vorzugsweise gebildet durch eine mikroperforierte Folie, insbesondere durch eine mikroperforierte PP-Folie, aufweisen.

7. Luftführungselement nach einem der vorstehenden Ansprüche, **dadurch gekennzeichnet, dass** der Hohlkörper (1) durch wenigsten zwei miteinander verbundene Schalen gebildet ist.

8. Luftführungselement nach einem der vorstehenden Ansprüche, **dadurch gekennzeichnet, dass** der langgestreckte Hohlkörper (1) im Querschnitt rund, oval, viereckig und/oder vieleckig ausgebildet ist.

**Claims**

1. Air guiding element for motor vehicles, comprising at least one elongated hollow body (1), the inner wall (W) of which defines an air guidance duct (2), wherein sound-absorbing auxiliary bodies (2, 3) are provided in the hollow body (1) along its longitudinal direction of extension (L), which bodies are arranged and fastened in the hollow body (1) in such a way that air flowing in the hollow body (1) along the air guidance duct (2) additionally flows along the auxiliary bodies (2), interacting therewith, wherein the auxiliary bodies (3, 4) have different thicknesses (d1, d2) and the auxiliary bodies (3, 4) absorb a different frequency Y of the air-transmitted sound depending on the thickness (d1, d2),
   **characterized in that**

the thicknesses (d1, d2) of the auxiliary bodies (3, 4) are defined depending on the frequencies Y to be absorbed by the air guidance element as follows:

$$thickness\ d = \frac{speed\ of\ sound\ in\ air}{X \cdot frequency\ Y}$$

wherein the speed of sound in 20°C dry air is 343.2 m/s and wherein
X is a value of between 7 to 9 and the frequencies to be absorbed are between 800 Hertz and 2500 Hertz.

2. Air guiding element according to claim 1, **characterized in** the variation of the thicknesses (d1, d2) of the auxiliary bodies (3, 4) takes place continuously or stepwise.

3. Air guiding element according to one of the preceding claims, **characterized in that** the elongated body (1) has varying cross-sectional areas along its longitudinal direction of extension (L) and **in that** the auxiliary bodies (3, 4) are positioned inside the hollow body (1) in such a way that the difference of cross-sectional area and area of the auxiliary body (3, 4) in each case vary from one another with a deviation of at most 20 % so that the remaining remainder cross-sectional area remains largely constant in the flow direction of the air.

4. Air guiding element according to one of the preceding claims, **characterized in that** the auxiliary bodies (3, 4) are made up of a single layer or of multiple layers.

5. Air guiding element according to one of the preceding claims, **characterized in that** the auxiliary bodies (3, 4) are formed of a nonwoven material, preferably of a PET nonwoven material.

6. Air guiding element according to one of the preceding claims, **characterized in that** those sides of the auxiliary bodies (3, 4) that face the passing air additionally comprise a microperforated surface, preferably constituted by a microperforated film, in particular by a microperforated PP film.

7. Air guiding element according to one of the preceding claims, **characterized in that** the hollow body (1) is formed by at least two shells connected to one another.

8. Air guiding element according to one of the preceding claims, **characterized in that** the elongated hollow body (1) is of circular, oval, quadrangular and/or polygonal cross-section.

**Revendications**

1. Élément de guidage d'air pour véhicules automobiles comportant au moins un corps creux (1) allongé dont la paroi intérieure (W) définit un canal de guidage d'air (2), des corps supplémentaires (3, 4) absorbant le son étant prévus dans le corps creux (1) le long de sa direction longitudinale (L), lesdits corps supplémentaires étant disposés et fixés dans le corps creux (1) de telle manière que de l'air qui s'écoule dans le corps creux (1) le long du canal de guidage d'air (2), s'écoule en outre le long des corps supplémentaires (3, 4) et interagit avec ceux-ci, les corps supplémentaires (3, 4) présentant différentes épaisseurs (d1, d2) et les corps supplémentaires (3, 4) absorbant, en fonction de l'épaisseur (d1, d2), une fréquence Y différente du son transmis par l'air,
**caractérisé en ce que**

les épaisseurs (d1, d2) des corps supplémentaires (3, 4) se définissent comme suit en fonction des fréquences Y à absorber par l'élément de guidage d'air :

$$\text{É}paisseur\ d = \frac{Vitesse\ du\ son\ dans\ l'air}{X \cdot Fr\text{é}quence\ Y}$$

dans lequel la vitesse du son dans l'air sec à 20 °C est de 343,2 m/s et dans lequel
X prend une valeur comprise entre 7 et 9 et les fréquences à absorber sont comprises entre 800 hertz et 2500 hertz.

2. Élément de guidage d'air selon la revendication 1, **caractérisé en ce que** la variation des épaisseurs (d1, d2) des corps supplémentaires (3, 4) se fait en continu ou par paliers.

3. Élément de guidage d'air selon l'une des revendications précédentes, **caractérisé en ce que** le corps creux (1) allongé présente des aires de section transversale variables le long de sa direction longitudinale (L) et les corps supplémentaires (3, 4) sont positionnés dans le corps creux (1) de telle manière que la différence entre l'aire de section transversale et l'aire du corps supplémentaire (3, 4) varie avec un écart respectif de 20 % au maximum, afin que l'aire de section transversale restante demeure la plus constante possible dans la direction d'écoulement de l'air.

4. Élément de guidage d'air selon l'une des revendications précédentes, **caractérisé en ce que** les corps supplémentaires (3, 4) sont constitués d'une seule couche ou de plusieurs couches.

5. Élément de guidage d'air selon l'une des revendications précédentes, **caractérisé en ce que** les corps supplémentaires (3, 4) sont formés en un matériau non tissé, de préférence en un matériau non tissé en PET.

6. Élément de guidage d'air selon l'une des revendications précédentes, **caractérisé en ce que** les côtés des corps supplémentaires (3, 4) orientés vers l'air circulant présentent en plus une surface microperforée, de préférence formée par un film microperforé, en particulier par un film en PP microperforé.

7. Élément de guidage d'air selon l'une des revendications précédentes, **caractérisé en ce que** le corps creux (1) est formé par au moins deux coques reliées l'une à l'autre.

8. Élément de guidage d'air selon l'une des revendications précédentes, **caractérisé en ce que** le corps creux (1) allongé est réalisé à section transversale ronde, ovale, quadrangulaire et/ou polygonale.

Fig. 1

Fig. 2

EP 4 201 718 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3838637 A1
- DE 10331085 B3
- JP 2014231263 A